# EUROPEAN PATENT SPECIFICATION

(11) **EP 3 434 833 B1**
(45) Date of publication and mention of the grant of the patent: **18.03.2020**
(21) Application number: 18185257.5
(22) Date of filing: 24.07.2018
(51) Int. Cl.: E03B 7/07, E03C 1/10, F16K 37/00

(54) **SIMPLIFIED METHOD FOR TESTING A BACKFLOW PREVENTER ASSEMBLY**
VEREINFACHTES VERFAHREN ZUR PRÜFUNG EINER RÜCKFLUSSVERHINDERERANORDNUNG
PROCÉDÉ SIMPLIFIÉ POUR TESTER UN ENSEMBLE DISPOSITIF ANTIREFOULEMENT

(30) Priority: 24.07.2017 NL 2019334
(43) Date of publication of application: 30.01.2019
(73) Proprietor: H.S.F. Samenwerkende Fabrieken B.V., 6921 RE Duiven (NL)
(72) Inventor: BARENDREGT, Victor Michaël Alexander, 1359 HN ALMERE (NL)
(74) Representative: EP&C

(56) References cited:
- EP-A2- 1 741 843
- US-A- 5 404 905
- US-A1- 2004 035 467

## Description

### Field of the invention

The present invention relates to a method of testing a backflow preventer assembly and to a backflow preventer assembly.

### Background of the invention

Backflow preventer assemblies are known from the prior art. Said backflow preventers restrict a backflow into a liquid supply line. Liquid flowing back from a separate conduit system is often contaminated. In some situations a backflow of the contaminated liquid could be hazardous for people's health and should therefore be prevented. A typical situation is a situation in which water from a pipeline is supplied to one or more taps which are used for drinking and other types of human consumption of water and also to a central heating installation. In such a situation it is undesirable that water from the central heating installation would flow back into the pipeline and subsequently be used for human consumption. The backflow preventer prevents such a backflow.

A backflow preventer assembly comprises several moving parts. Failure of only a single part can already result in a failure of the entire backflow preventer assembly and result in health risks. In most countries it is therefore required by standards to periodically test, or inspect, the backflow preventer assembly. When a part of the assembly is not functioning, the backflow preventer assembly needs to be repaired or replaced.

US6675110B2 discloses a method for determining flow through a valve and for testing a relief valve in a backflow preventer. Said testing method includes determining differential pressures. The measuring of differential pressures requires a complex and expensive device, for instance the device disclosed in US5566704(A). A problem with such a device is that the user needs to attach a number of conduits to the test cocks in a specific order. This becomes even a bigger problem when a user only rarely uses the device, because he tends to forget the specific order of attachment.

The invention is amongst others based on the recognition that there is a need in the field of the art for a simpler and more cost-effective alternative and the insight that such a simpler and more cost-effective alternative is possible.

US5404905A discloses a backflow prevention device with a failure indicator designed to determine the functional state of integral backflow prevention device(s) or check valve(s). Check valve(s) are assembled in combination with pressure gauge(s) or failure indicator(s) and valve(s) or flow regulation device(s) between an inlet area and outlet area, and is designed to allow a working fluid to flow in the desired direction of fluid flow and prevent backflow. A built in test or procedure enables the functional condition of backflow prevention device(s) or check valve(s) to be determined.

US2004/035467A1 discloses a valve assembly of a pipe disconnector for separating a service water system which is arranged to be filled or re-filled from a drinking water system, comprising upstream and downstream backflow preventers which both close in the direction from the service water system to the drinking water system, and a relief valve, which is exposed to the pressure of the drinking water system in closing direction and which is adapted to connect the space between the backflow preventers to a drain, when this pressure ceases. A pipe disconnector is to be provided, which is easy to clean and to service. Furthermore, a valve assembly is to be provided which can be used equally for pipe disconnectors of the type CA and for pipe disconnectors of the type BA.; This is achieved in that the backflow preventers and the relief valve are combined to form a structural unit which is designed to be removed from and set in, as a whole, into a pipe disconnector casing having connections for drinking water and service water and the drain. The relief valve comprises a slide valve body, which, at one end face, is exposed to the drinking water pressure and, at the opposite end face, is exposed to the pressure in a space between the backflow preventers, and which is arranged to cover, in its closed position, a lateral outlet opening of the pipe disconnector casing, which opening communicates with the outlet.

The disclosures US5404905A and US2004/035467A1 relate to a cumbersome method of testing.

### Object of the invention

It is an object of the invention to provide a simpler testing method for backflow preventer assemblies.

It is another object of the invention to provide a more cost-effective testing method for backflow preventer assemblies.

Yet another object of the invention is to provide a more robust backflow preventer.

### Summary of the invention

In order to achieve at least one object, the present invention provides a method of testing a backflow preventer assembly, the backflow preventer assembly comprising at least:
- a backflow preventer comprising:
   - a housing comprising an inlet and an outlet,
   - an upstream check valve assembly positioned in the housing downstream of the inlet and being biased to a closed position,
   - a downstream check valve assembly positioned in the housing downstream of the upstream check valve assembly and being biased to a closed position,
   - an intermediate chamber positioned between the upstream check valve assembly and the downstream check valve assembly, the intermediate chamber comprising a discharge opening at a bottom side thereof for emptying the intermediate chamber,
   - a relief valve located in the housing, the relief valve being positioned upstream of the downstream check valve assembly and being configured to move between a closed position in which it closes off the discharge opening and an open position in which the discharge opening is open,
- an upstream test cock positioned upstream of the upstream check valve, wherein the upstream test cock is configured to be attached to a liquid pressure measurement device,
- a downstream test cock positioned downstream of the downstream check valve, wherein the downstream test cock is configured to be attached to a liquid pressure measurement device,
- an upstream shut off valve positioned upstream of the upstream test cock, wherein an upstream zone is defined between the upstream check valve assembly and the upstream shut off valve,
- a downstream shut off valve positioned downstream of the downstream test cock, wherein a downstream zone is defined between the downstream check valve assembly and the downstream shut off valve,
wherein the method of testing the backflow preventer assembly comprises:
- testing the downstream shut off valve and the downstream check valve assembly by measuring a development over time of a first pressure in the downstream zone at the downstream test cock,
- testing an opening pressure of the relief valve by closing the upstream shut off valve, gradually lowering the pressure in the upstream zone by tapping off liquid from the upstream zone via the upstream test cock and by measuring a second, absolute pressure at the upstream test cock at which fluid starts to discharge via the discharge opening and comparing said absolute pressure to a required threshold pressure for the relief valve.

With the method according to the present invention a backflow preventer can be tested without using any differential pressure meter. This is a substantial advantage, because an absolute pressure can be measured with a simpler device, which does not require a user to remember a specific and complex order of attachment, which is required in case a differential pressure meter is used.

In an embodiment of the method, the first pressure and the second, absolute pressure are measured with a manometer. The use of a manometer adds to the simplicity of the testing method, for the manometer only needs to be attached to one test cock at a time.

In an embodiment of the method, an order of testing the backflow preventer assembly comprises the following steps in the given order:
a) testing the entire backflow preventer assembly on external leakage,
b) testing the upstream shut off valve and upstream check valve assembly on shutting off,
c) testing the downstream shut off valve and the downstream check valve assembly on shutting off,
d) testing the relief valve on shutting off, on being stuck, and on the opening pressure.

In an embodiment of the method, testing the backflow preventer assembly on external leakage comprises the steps of:
- drying an outer surface of the backflow preventer assembly,
- waiting a predetermined period of time, in particular at least one minute,
- visually check the backflow preventer assembly for leakages.

In an embodiment of the method, testing the upstream shut off valve comprises the steps of:
- closing the downstream shut off valve and subsequently closing the upstream shut off valve,
- opening the upstream test cock,
- drying the upstream test cock while maintaining a visible liquid level in the upstream test cock,
- determining whether the liquid level remains constant or rises, wherein when the liquid level rises, the upstream shut off valve is considered to malfunction,
- [closing the upstream test cock,
- opening the downstream shut off valve and subsequently opening the upstream shut off valve.]

In an embodiment of the method, testing the upstream check valve assembly comprises the steps of:
- closing the downstream shut off valve and subsequently closing the upstream shut off valve,
- opening the upstream test cock,
- drying the upstream test cock while maintaining a visible liquid level in the upstream test cock,
- determining whether the liquid level remains constant or falls, wherein if the liquid level falls:
   - drying the discharge opening, and:
   - waiting a predetermined period of time, in particular 30 seconds, and
   - checking the discharge opening for dripping, wherein when liquid drips from the discharge opening, then the relief valve is considered not to shut off adequately, and wherein when no liquid drips from the discharge opening, the upstream check valve assembly is considered to malfunction,
- repairing or replacing the backflow preventer when the upstream check valve assembly is not functioning, and repeating the previous steps,
- closing the upstream test cock,
- opening the downstream shut off valve and subsequently opening the upstream shut off valve.

In an embodiment of the method, testing the downstream shut off valve comprises the steps of:
- coupling the liquid pressure measurement device to the downstream test cock,
- opening the downstream test cock,
- closing the downstream shut off valve and subsequently closing the upstream shut off valve,
- opening the upstream test cock,
- depressurizing a conduit system downstream of the downstream shut off valve,
- determining the liquid pressure level with the liquid pressure measurement device, wherein when the liquid pressure decreases and the discharge opening remains dry, then the downstream shut off valve is considered to malfunction,
- repairing the downstream shut off valve if the downstream shut off valve is considered to malfunction, and repeating the previous steps,
- closing the downstream test cock and the upstream test cock,
- opening the downstream shut off valve and subsequently opening the upstream shut off valve.

In an embodiment of the method, testing the downstream check valve assembly comprises the steps of:
- coupling the liquid pressure measurement device to the downstream test cock,
- opening the downstream test cock,
- closing the downstream shut off valve and subsequently closing the upstream shut off valve,
- opening the upstream test cock,
- depressurizing a conduit system downstream of the backflow preventer assembly,
- determining the liquid pressure level with the liquid pressure measurement device, wherein if the liquid pressure decreases and the discharge opening leaks liquid, then the downstream check valve assembly is considered to malfunction,
- replacing the backflow preventer if the downstream check valve assembly is not functioning, and repeating the previous steps,
- closing the downstream test cock and the upstream test cock,
- opening the downstream shut off valve and subsequently opening the upstream shut off valve.

In an embodiment of the method, testing the relief valve on shutting off comprises the steps of:
- closing the downstream shut off valve,
- drying the discharge opening,
- waiting a predetermined period of time, in particular at least 30 seconds,
- inspecting whether liquid drips from the discharge opening, wherein if liquid drips from the discharge opening, then the relief valve is considered not to shut off adequately,
- replacing the backflow preventer if the relief valve does not shut off adequately, and repeating the previous steps,
- opening the downstream shut off valve.

In an embodiment of the method, testing the functioning of the relief valve comprises the steps of:
- closing the downstream shut off valve and subsequently closing the upstream shut off valve,
- opening the upstream test cock,
- determining whether liquid exits the discharge opening, wherein if no liquid exits the discharge opening, then the relief valve is stuck and thus considered to malfunction,
- replacing the backflow preventer if the relief valve is not functioning, and repeating the previous steps,
- closing the upstream test cock,
- opening the downstream shut off valve and subsequently opening the upstream shut off valve.

In an embodiment of the method, testing the required opening pressure of the relief valve comprises the steps of:
- attaching a liquid pressure measurement device to the upstream test cock,
- opening the upstream test cock,
- closing the upstream shut off valve,
- opening a draining facility in a conduit of the liquid pressure measurement device,
- closing the draining facility in the conduit of the liquid pressure measurement device as soon as liquid starts exiting the discharge opening,
- determining the liquid pressure level with the liquid pressure measurement device, wherein if the liquid pressure level is below a threshold value, then the relief valve is not opening at the required liquid pressure level and thus not functioning,
- replacing the backflow preventer if the relief valve is not functioning adequately, and repeating the previous steps,
- closing the upstream test cock,
- opening the downstream shut off valve and subsequently opening the upstream shut off valve.

The invention further provides a backflow preventer assembly, comprising:
- a backflow preventer comprising:
   - a housing comprising an inlet and an outlet,
   - an upstream check valve assembly positioned in the housing downstream of the inlet and being biased to a first closed position,
   - a downstream check valve assembly positioned in the housing downstream of the upstream check valve and being biased to a second closed position,
   - an intermediate chamber positioned between the upstream check valve assembly and the downstream check valve assembly, the intermediate chamber comprising a discharge opening at a bottom side thereof for emptying the intermediate chamber,
   - a relief valve located in the housing, the relief valve being positioned upstream of the downstream check valve assembly and being configured to move between a third closed position in which it closes off the discharge opening and an open position in which the discharge opening is open,
- an upstream test cock positioned upstream of the upstream check valve, wherein the upstream test cock is configured to be attached to a liquid pressure measurement device, wherein an upstream zone is defined between the upstream check valve assembly and the upstream shut off valve,
- a downstream test cock positioned downstream of the downstream check valve, wherein the downstream test cock is configured to be attached to a liquid pressure measurement device,
- an upstream shut off valve positioned upstream of the upstream test cock, **characterized in that**
- a downstream shut off valve positioned downstream of the downstream test cock, wherein a downstream zone is defined between the downstream check valve assembly and the downstream shut off valve, and in that the intermediate chamber is free of any test cock at the intermediate chamber.

In an embodiment of the backflow preventer assembly, the upstream check valve assembly and the relief valve are integrally connected.

These and other aspects of the invention will be more readily appreciated as the same becomes better understood by reference to the following detailed description and considered in connection with the accompanying drawings in which like reference symbols designate like parts.

### Brief description of the figures

Figures 1 and 2 schematically show cross-sections of an embodiment of a backflow preventer assembly in different operating configurations which can be used in the testing method according to the invention.
Figures 3 and 4A schematically show perspective views of another embodiment of a backflow preventer assembly attached to a liquid pressure meter according to the invention.
Figure 4B schematically shows a perspective view of an embodiment of a backflow preventer according to the invention.
Figures 5 and 6 show a flow chart of a testing method for the backflow preventer assembly according to the invention.

### Detailed description of the figures

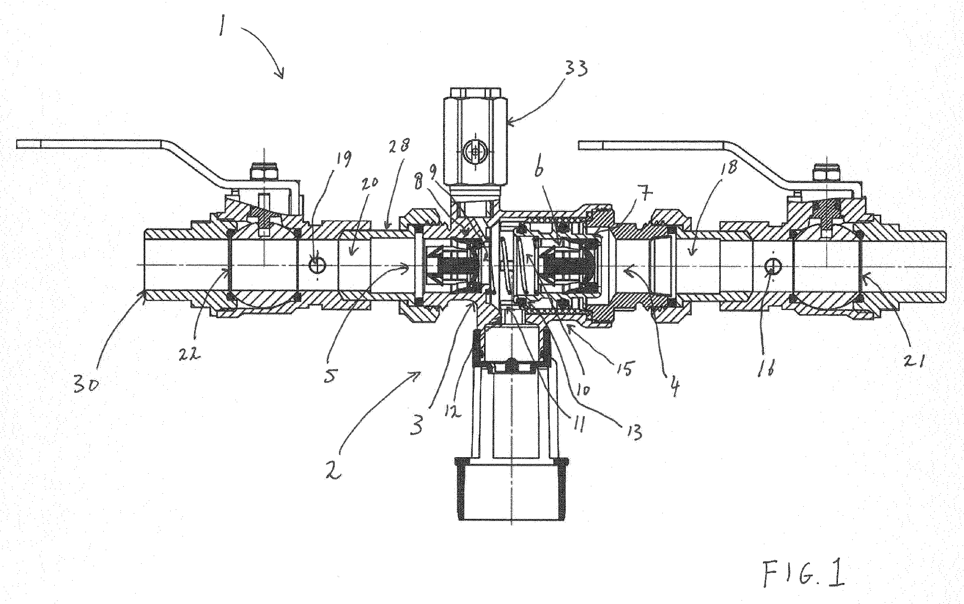

Figures 1 shows a cross-section of a backflow preventer assembly 1. The backflow preventer assembly 1 comprises a backflow preventer 2. The backflow preventer 2 comprises several parts. First, the backflow preventer 2 has a housing 3 which comprises an inlet 4 and an outlet 5. An upstream check valve assembly 6 is positioned in the housing 3 downstream of the inlet 4. The upstream check valve assembly 6 is biased to a first closed position 7. In the housing 3, downstream of the upstream check valve, a downstream check valve assembly 8 is provided. The downstream check valve is also biased to a second closed position 9.

An intermediate chamber 10 is positioned between the upstream and downstream check valve assemblies. The intermediate chamber 10 has a discharge opening 11 at a bottom side 12 thereof. The discharge opening 11 is provided for emptying the intermediate chamber 10.

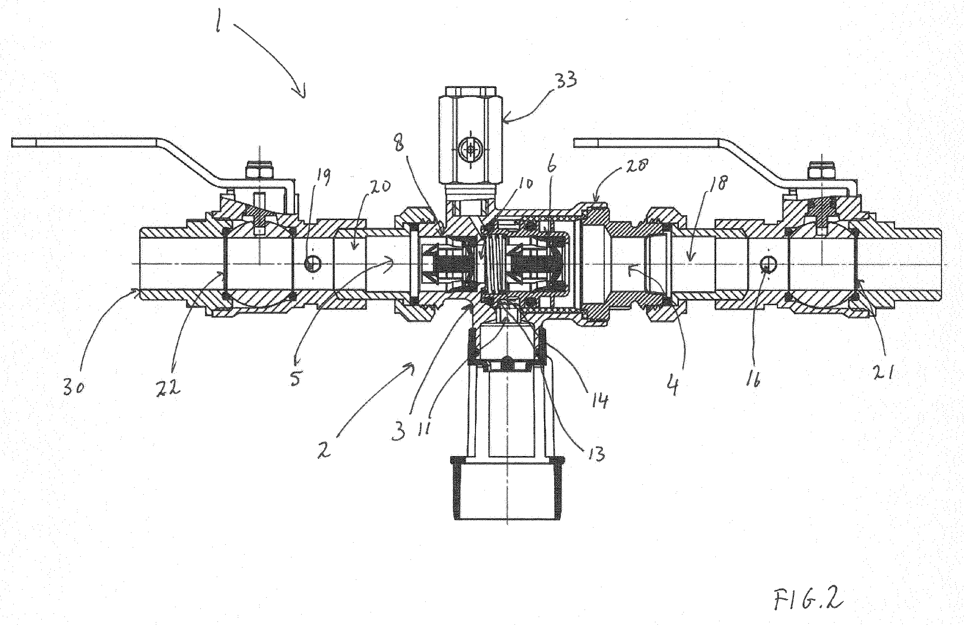

A relief valve 13 is located in the housing 3, upstream of the downstream check valve assembly 8. The relief valve 13 is configured to move between a third closed position 14 (figure 2) in which it closes off the discharge opening 11, and an open position 15 (figure 1) in which the discharge opening 11 is open, and vice versa. The relief valve 13 and upstream check valve assembly 6 are integrated into a single valve assembly having two separate functions. Due to the integral construction, the relief valve 13 is biased to an open position 15.

The backflow preventer assembly 1 furthermore comprises an upstream test cock 16. The upstream test cock 16 is positioned upstream of the upstream check valve assembly 6. The upstream test cock 16 is configured to be attached to a liquid pressure measurement device 17.

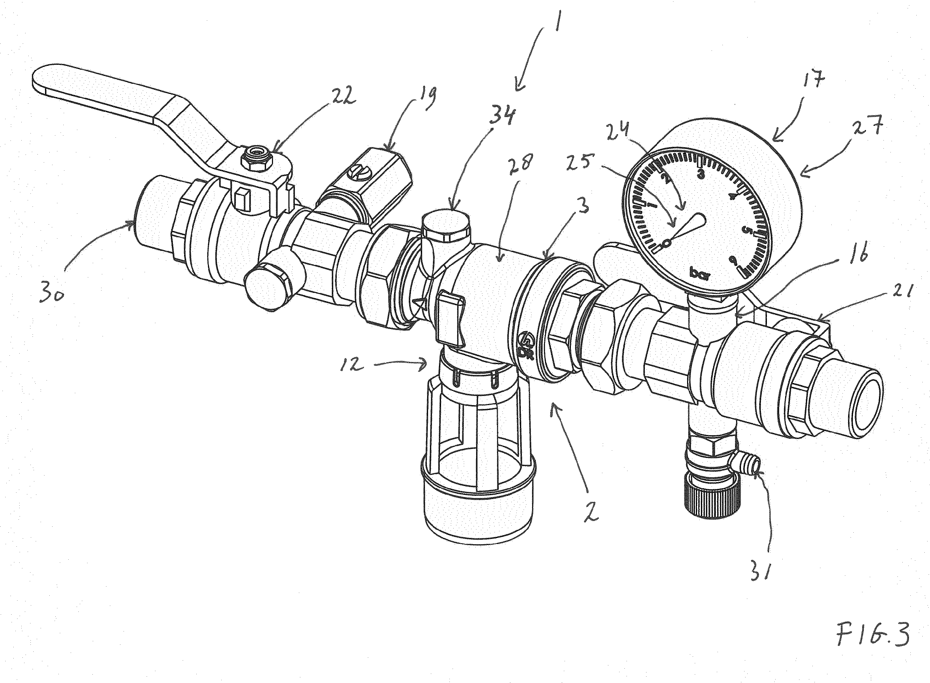

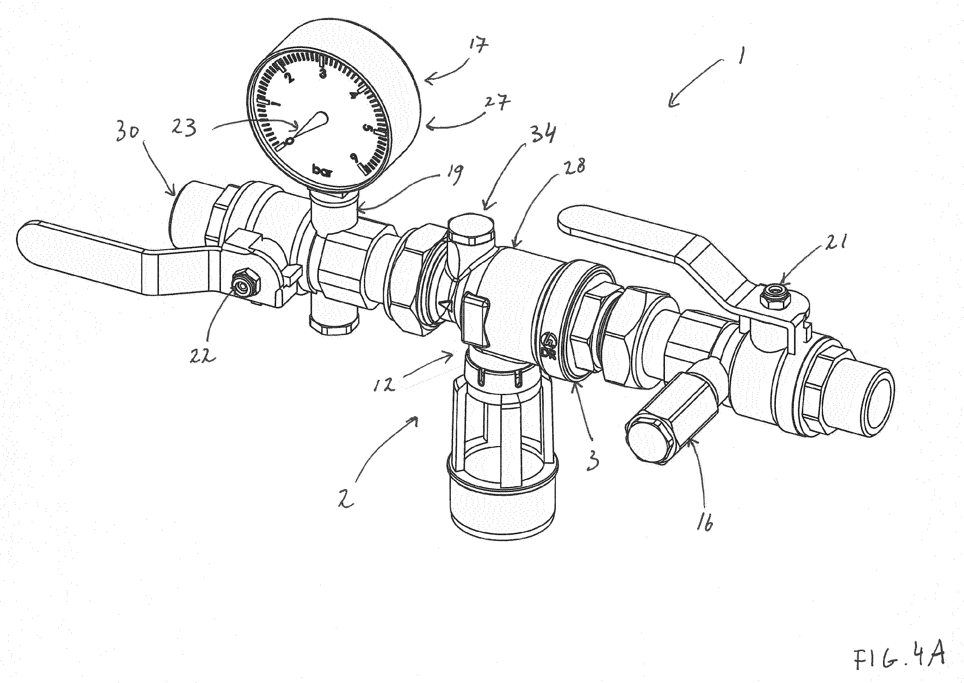

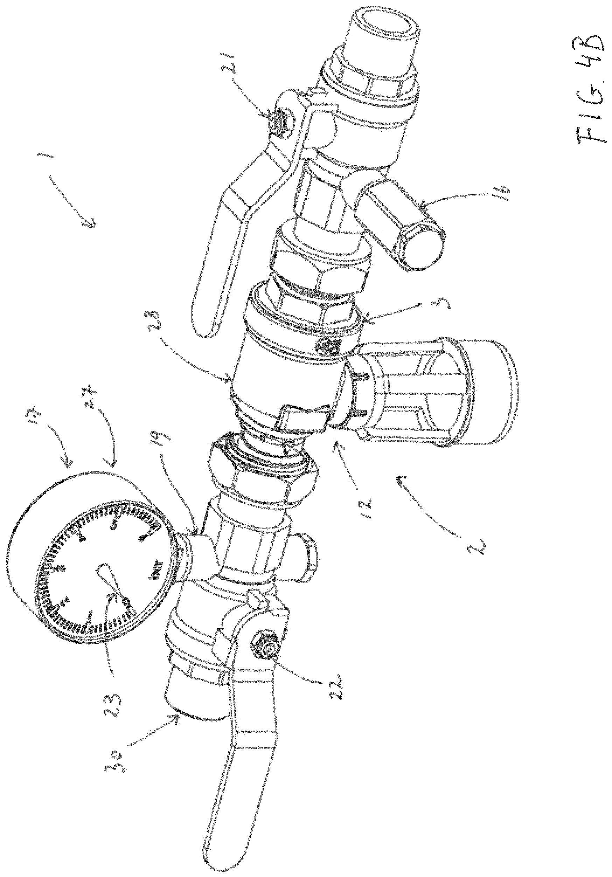

In this embodiment the backflow preventer assembly 1 comprises a third test cock 33 connected to the intermediate chamber 10. As will be explained further below, in the method according to the invention, the third test cock 33 is not used. The testing method according to the invention works with a backflow preventer assembly 1 comprising a third test cock 33 connected to the intermediate chamber 10. The method according to the invention also works with a backflow preventer assembly 1 which does not comprise any test cock connected to the intermediate chamber 10, in other words does not comprise a third test cock 33. Figure 3, 4A and 4B show embodiments of the backflow preventer assembly free of any test cock connected to the intermediate chamber, so without a third test cock.

The embodiments as shown in figures 1 and 2 is prior art and does not form part of the invention according to claims 12 and/or 13. The method according to claim 1 may be used on a backflow preventer of the prior art as shown in figures 1 and 2.
Figure 3 shows a manometer 27 as liquid pressure measurement device 17.

A downstream test cock 19 is positioned downstream of the downstream check valve. The downstream test cock 19 is also configured to be attached to a liquid pressure measurement device 17, or manometer 27 as shown in figure 4A.

It is noted that the embodiment of figures 3 and 4A still comprises a connector 34 to which the third test cock 33 can be connected. However, this connector 34 serves no function and in a further embodiment as shown in figure 4B this connector can be removed. In figure 4B an embodiment of a backflow preventer is shown which does not comprise any test cock connected to the intermediate chamber, nor does said backflow preventer 1 of figure 4B comprise a connector 34 to which a third test cock can be connected.

The backflow preventer assembly 1 further comprises an upstream shut off valve 21 positioned upstream of the upstream test cock 16, and a downstream shut off valve 22 positioned downstream of the downstream test cock 19. The upstream shut off valve 21 and downstream shut off valve 22 each have an operating member.

An upstream zone 18 is defined between the upstream test check valve assembly and the upstream shut off valve 21. A downstream zone 20 is defined between the downstream check valve assembly 8 and the downstream shut off valve 22.

The above described backflow preventer assembly can be provided as an assembly of interconnected parts, or as an integral device.

As most of the abovementioned parts are prone to failure, it is required by standards in most countries to test, or inspect, said backflow preventer assembly 1 at regular time intervals.

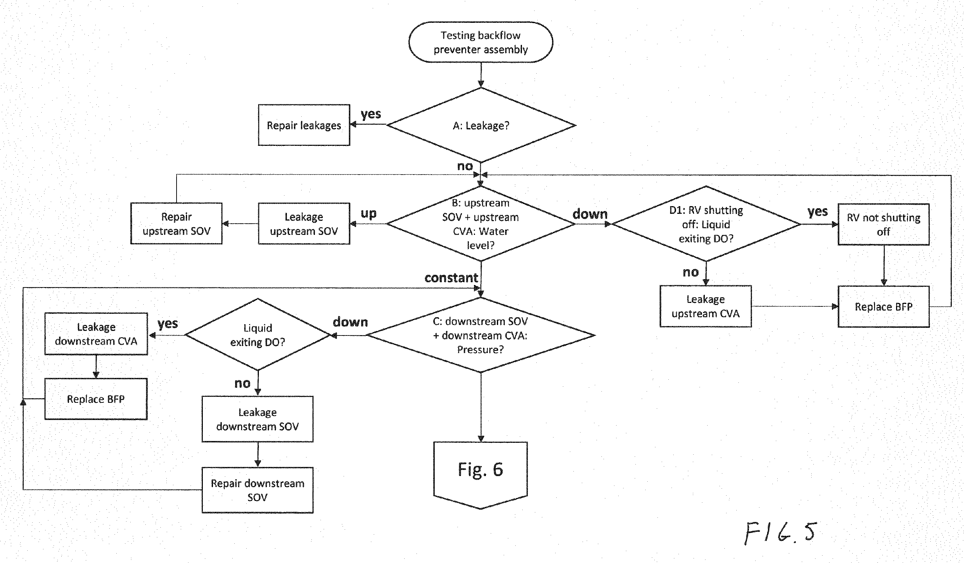

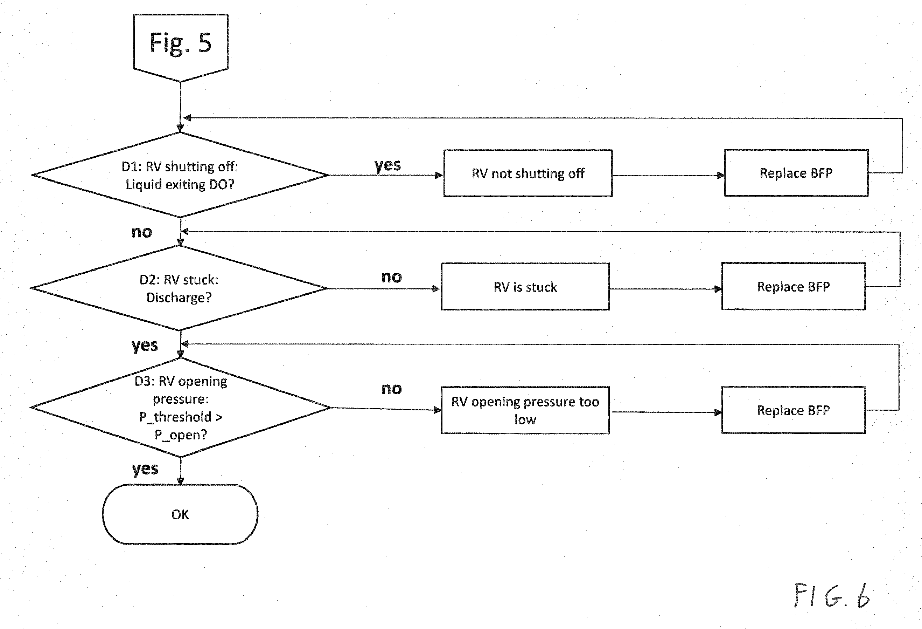

Turning to figures 5 and 6, a flow chart of a testing method for the backflow preventer assembly 1 is shown. An order of testing the backflow preventer assembly 1 comprises the following steps in the given order:
a) testing the entire backflow preventer assembly 1 on external leakage,
b) testing the upstream shut off valve 21 and upstream check valve assembly 6 on shutting off,
c) testing the downstream shut off valve 22 and the downstream check valve assembly 8 on shutting off,
d) testing the relief valve 13 on shutting off (D1), on being stuck (D2), and on the opening pressure 24 (D3).

First the entire backflow preventer assembly 1 is tested on external leakage, see box A: leakage in figure 5. Testing on external leakage is done by first completely drying the outer surface 28 of the backflow preventer assembly 1. Drying is achieved by using a towel, or any other tool suited for drying the outer surface 28 of the backflow preventer assembly 1. After waiting a predetermined period of time, in particular one minute, the backflow preventer assembly 1 is visually checked for leakages. If a leakage is detected, it needs to be repaired.

After checking, and possibly repairing any external leakages, the upstream shut off valve 21 and upstream check valve assembly 6 are tested on shutting off. Testing the upstream shut off valve 21 first entails the step of closing the downstream shut off valve 22 and subsequently closing the upstream shut off valve 21. Next the upstream test cock 16 is opened. When opening said upstream test cock 16, water tends to discharge from it. Also water tends to exit the discharge opening 11 during this step. Therefore a next step is to dry the upstream test cock 16 while maintaining a visible liquid level in the upstream test cock 16. Then it has to be determined what happens to the liquid level in the upstream test cock 16. There are three possibilities: the liquid level may rise, fall, or remain constant.

In case the liquid level rises, the upstream shut off valve 21 is considered to malfunction. To solve this problem, the upstream shut off valve 21 needs to be repaired, and the backflow preventer assembly 1 needs to be tested again starting with step B.

In case the liquid level in the upstream test cock 16 falls, either the upstream check valve assembly 6, the relief valve 13, or both are considered to malfunction. In all cases, the backflow preventer 2 needs to be replaced, after which the backflow preventer assembly 1 needs to be tested again starting with step B. After completing the prescribed steps, the upstream test cock 16 is closed, and the downstream shut off valve 22 is opened. Then the upstream shut off valve 21 is opened.

In order to determine whether the upstream check valve assembly 6 malfunctions, start from an operation position. The backflow preventer assembly 1 is in the operation position when all shut off valves are opened.

First the downstream shut off valve 22 is closed, then the upstream shut off valve 21 is closed. The upstream test cock 16 is opened. When opening the upstream test cock 16, liquid tends to discharge from the said upstream test cock 16. Also liquid tends to exit the discharge opening 11. The next step is therefore drying the opened upstream test cock 16, while keeping a liquid level inside the upstream test cock 16 visible. The step that follows is determining whether the liquid level remains constant or drops.

If the liquid level drops, the procedure continues by drying the discharge opening 11, and waiting a predetermined period of time, in particular 30 seconds. Then the discharge opening 11 is checked for dripping, wherein when liquid drips from the discharge opening 11, then the relief valve 13 is considered not to shut off adequately. When no liquid drips from the discharge opening 11, the upstream check valve assembly 6 is considered to malfunction. In both cases the backflow preventer 2 needs to be replaced, after which the backflow preventer assembly 1 needs to be tested again starting with step B. Then the upstream test cock 16 is closed, and the downstream shut off valve 22 is opened and subsequently the upstream shut off valve 21 is opened.

The next step in the testing method involves testing the downstream shut off valve 22 and the downstream check valve assembly 8: step C. To this end a liquid pressure measurement device 17 is coupled to the downstream test cock 19, after which the downstream test cock 19 is opened. Next the downstream test cock 19 is closed and subsequently also the upstream shut off valve 21 is closed. Next, the upstream test cock 16 is opened. Liquid tends to discharge from the upstream test cock 16 when opening said upstream test cock 16. Next a conduit system 30 which is located downstream of the downstream shut off valve 22 is depressurized. This can be done for example by opening a water tap and letting the liquid flow, thereby depressurizing said conduit system 30.

The liquid pressure measurement device 17, in particular a manometer 27, is used to determine the liquid pressure level at the downstream test cock 19. In particular a first pressure 23 development over time in the downstream zone 20 at the downstream test cock 19 is measured. When the liquid pressure decreases over time and the discharge opening 11 remains dry, then the downstream shut off valve 22 is considered to malfunction. If this is the case, then the downstream shut off valve 22 needs to be repaired, after which the steps of step C are repeated.

However, when the liquid pressure decreases and the discharge opening 11 leaks liquid, then the downstream check valve assembly 8 is considered to malfunction. In that case, the backflow preventer 2 needs to be replaced, after which the steps of step C are repeated.

After either repairing the downstream shut off valve 22, replacing the backflow preventer 2, or doing nothing in case both parts are functioning adequately, the downstream test cock 19 and the upstream test cock 16 are closed. Then the downstream shut off valve 22 is opened and subsequently the upstream shut off valve 21 is opened. The manometer 27 may be detached.

If the pressure in the downstream zone 20 remains constant during step C, the testing method continues with testing the relief valve 13. Figure 5 shows that the relief valve 13 is tested threefold, namely on shutting off, on being stuck, and on its opening pressure 24.

Firstly the relief valve 13 is tested on shutting off, see box D1. The first step entails closing the downstream shut off valve 22, and then drying the discharge opening 11. After waiting a predetermined period of time, in particular 30 seconds, the discharge opening 11 is inspected on dripping. If liquid drips from the discharge opening 11, then the relief valve 13 is considered not to shut off adequately. In that case the backflow preventer 2 needs to be replaced, and the previous steps of step D1 are repeated. Then the downstream shut off valve 22 is opened.

Secondly the relief valve 13 is tested on functioning, in particular on being stuck. Therefore the downstream shut off valve 22 and subsequently the upstream shut off valve 21 are closed. The upstream test cock 16 is opened. Liquid tends to discharge from the upstream test cock 16 when opening said upstream test cock 16. Now it is determined whether liquid exits the discharge opening 11. The backflow preventer 2 should discharge liquid from the discharge opening 11. If this is not the case, then the relief valve 13 is stuck and thus considered to malfunction. The backflow preventer 2 then has to be replaced and the previous steps of step D2 are repeated. Then the upstream test cock 16 is closed, and the downstream shut off valve 22 is opened. Subsequently the upstream shut off valve 21 is opened.

Thirdly the required opening pressure 24 of the relief valve 13 is tested. This entails attaching a liquid pressure measurement device 17, a manometer 27, to the upstream test cock 16. Then the upstream test cock 16 is opened, after which the upstream shut off valve 21 is closed. A draining facility 31 is provided at substantially the same location as the manometer 27. The draining facility 31 may also be provided on a conduit of the manometer 27 itself, namely at the upstream zone 18. The next step is opening the draining facility 31. This lowers the pressure in the upstream zone 18. At a predetermined liquid pressure level the relief valve 13 should open resulting in a discharge of liquid from the discharge opening 11. As soon as liquid starts exiting the discharge opening 11, the draining facility 31 needs to be closed. Then the liquid pressure level is determined by reading the manometer 27. If the liquid pressure level is below a predetermined threshold value, then the relief valve 13 does not open at the required liquid pressure level and thus does not function properly. In practice a threshold value of 0.14 bar is required. The backflow preventer 2 is to be replaced if the relief valve 13 does not functioning properly, and the previous steps of step D3 are repeated. Then the upstream test cock 16 is closed, the downstream shut off valve 22 is opened. Subsequently the upstream shut off valve 21 is opened.

An advantage of the present testing method is that only a simple manometer 27 is needed to be able to perform all steps. The method thus entails testing the downstream shut off valve 22 and the downstream check valve assembly 8 by measuring a first pressure 23 development over time in the downstream zone 20 at the downstream test cock 19. It furthermore entails testing an opening pressure 24 of the relief valve 13 by closing the upstream shut off valve 21, gradually lowering the pressure in the upstream zone 18 by tapping off liquid from the upstream zone 18 via the upstream test cock 16 and by measuring a second, absolute pressure 25 at the upstream test cock 16 at which fluid starts to discharge via the discharge opening 11 and comparing said absolute pressure to a required threshold pressure for the relief valve 13. The manometer 27 measures the first pressure 23 and the second, absolute pressure 25.

For the average plumber a manometer 27 is standard equipment. Said method therefore requires no special equipment for testing the backflow preventer assembly 1. This is advantageous, as said special equipment is often expensive.

Turning to figures 3, 4A and 4B, a backflow preventer assembly 1 according to the invention is shown, comprising:
- a backflow preventer 2 comprising:
   - a housing 3 comprising an inlet 4 and an outlet 5,
   - an upstream check valve assembly 6 positioned in the housing 3 downstream of the inlet 4 and being biased to a first closed position 7,
   - a downstream check valve assembly 8 positioned in the housing 3 downstream of the upstream check valve and being biased to a second closed position 9,
   - an intermediate chamber 10 positioned between the upstream check valve assembly 6 and the downstream check valve assembly 8, the intermediate chamber 10 comprising a discharge opening 11 at a bottom side 12 thereof for emptying the intermediate chamber 10,
   - a relief valve 13 located in the housing 3, the relief valve 13 being positioned upstream of the downstream check valve assembly 8 and being configured to move between a third closed position 14 in which it closes off the discharge opening 11 and an open position 15 in which the discharge opening 11 is open,
- an upstream test cock 16 positioned upstream of the upstream check valve, wherein the upstream test cock 16 is configured to be attached to a liquid pressure measurement device 17, wherein an upstream zone 18 is defined between the upstream check valve assembly 6 and the upstream shut off valve 21,
- a downstream test cock 19 positioned downstream of the downstream check valve, wherein the downstream test cock 19 is configured to be attached to a liquid pressure measurement device 17, wherein a downstream zone 20 is defined between the downstream check valve assembly 8 and the downstream shut off valve 22,
- an upstream shut off valve 21 positioned upstream of the upstream test cock 16,
- a downstream shut off valve 22 positioned downstream of the downstream test cock 19,

The intermediate chamber 10 is free of test cocks. An advantage of the testing method according to the invention, is that a backflow preventer assembly 1 only requires two test cocks: a downstream test cock 19 connected to the downstream zone 20, and an upstream test cock 16 connected to the upstream zone 18. The embodiments of figures 3, 4A and 4B does not have a third test cock 33 connected to the intermediate chamber 10. This simplifies the backflow preventer assembly 1, thereby obtaining a more robust construction, as less parts are needed.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a"/"an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

The mere fact that certain measures are recited in mutually different dependent claims does not indicate that a combination of these measures cannot be used to advantage, as long as this combination does not contradict the appended claims.

## Claims

1. Method of testing a backflow preventer assembly (1), the backflow preventer assembly comprising at least:
- a backflow preventer (2) comprising:
• a housing (3) comprising an inlet (4) and an outlet (5),
• an upstream check valve assembly (6) positioned in the housing downstream of the inlet and being biased to a first closed position (7),
• a downstream check valve assembly (8) positioned in the housing downstream of the upstream check valve assembly and being biased to a second closed position (9),
• an intermediate chamber (10) positioned between the upstream check valve assembly and the downstream check valve assembly, the intermediate chamber comprising a discharge opening (11) at a bottom side (12) thereof for emptying the intermediate chamber,
• a relief valve (13) located in the housing, the relief valve being positioned upstream of the downstream check valve assembly and being configured to move between a third closed position (14) in which it closes off the discharge opening and an open position (15) in which the discharge opening is open,
- an upstream test cock (16) positioned upstream of the upstream check valve assembly, wherein the upstream test cock is configured to be attached to a liquid pressure measurement device (17),
- a downstream test cock (19) positioned downstream of the downstream check valve assembly, wherein the downstream test cock is configured to be attached to the liquid pressure measurement device,
- an upstream shut off valve (21) positioned upstream of the upstream test cock, wherein an upstream zone (18) is defined between the upstream check valve assembly and the upstream shut off valve,
- a downstream shut off valve (22) positioned downstream of the downstream test cock, wherein a downstream zone (20) is defined between the downstream check valve assembly and the downstream shut off valve,
wherein the method of testing the backflow preventer assembly comprises:
- testing the downstream shut off valve and the downstream check valve assembly by measuring a development over time of a first pressure (23) in the downstream zone at the downstream test cock,
- testing an opening pressure (24) of the relief valve by closing the upstream shut off valve, gradually lowering the pressure in the upstream zone by tapping off liquid from the upstream zone via the upstream test cock and by measuring a second, absolute pressure (25) at the upstream test cock at which fluid starts to discharge via the discharge opening and comparing said second, absolute pressure to a required threshold pressure for the relief valve.

2. Method according to claim 1, wherein the first pressure (23) and the second, absolute pressure (25) are measured with a manometer (27).

3. Method according to claim 1 or 2, wherein an order of testing the backflow preventer assembly (1) comprises the following steps in the given order:
a) testing the entire backflow preventer assembly (1) on external leakage,
b) testing the upstream shut off valve (21) and upstream check valve assembly (6) on shutting off,
c) testing the downstream shut off valve (22) and the downstream check valve assembly (8) on shutting off,
d) testing the relief valve (13) on shutting off, on being stuck, and on the opening pressure (24).

4. Method according to claim 3, wherein testing the backflow preventer assembly (1) on external leakage comprises the steps of:
- drying an outer surface (28) of the backflow preventer assembly (1),
- waiting a predetermined period of time, in particular at least one minute,
- visually check the backflow preventer assembly (1) for leakages.

5. Method according to claim 3 or 4, wherein testing the upstream shut off valve (21) comprises the steps of:
- closing the downstream shut off valve (22) and subsequently closing the upstream shut off valve,
- opening the upstream test cock (16),
- drying the upstream test cock while maintaining a visible liquid level in the upstream test cock,
- determining whether the liquid level remains constant or rises, wherein when the liquid level rises, the upstream shut off valve is considered to malfunction,
- closing the upstream test cock,
- opening the downstream shut off valve and subsequently opening the upstream shut off valve.

6. Method according to any of the claims 3-5, wherein testing the upstream check valve assembly (6) comprises the steps of:
- closing the downstream shut off valve (22) and subsequently closing the upstream shut off valve (21),
- opening the upstream test cock (16),
- drying the upstream test cock while maintaining a visible liquid level in the upstream test cock,
- determining whether the liquid level remains constant or falls, wherein if the liquid level falls:
• drying the discharge opening (11), and:
• waiting a predetermined period of time, in particular 30 seconds, and
• checking the discharge opening for dripping, wherein when liquid drips from the discharge opening, then the relief valve (13) is considered not to shut off adequately, and wherein when no liquid drips from the discharge opening, the upstream check valve assembly is considered to malfunction,
- replacing the backflow preventer (2) when the upstream check valve assembly is not functioning, and repeating the previous steps,
- closing the upstream test cock,
- opening the downstream shut off valve and subsequently opening the upstream shut off valve.

7. Method according to any of the preceding claims, wherein testing the downstream shut off valve (22) comprises the steps of:
- coupling the liquid pressure measurement device (17) to the downstream test cock (19),
- opening the downstream test cock,
- closing the downstream shut off valve and subsequently closing the upstream shut off valve (21),
- opening the upstream test cock (16),
- depressurizing a conduit system (30) downstream of the downstream shut off valve,
- determining the liquid pressure level with the liquid pressure measurement device, wherein when the liquid pressure decreases and the discharge opening (11) remains dry, then the downstream shut off valve is considered to malfunction,
- repairing the downstream shut off valve if the downstream shut off valve is considered to malfunction, and repeating the previous steps,
- closing the downstream test cock and the upstream test cock,
- opening the downstream shut off valve and subsequently opening the upstream shut off valve.

8. Method according to any of the preceding claims, wherein testing the downstream check valve assembly (8) comprises the steps of:
- coupling the liquid pressure measurement device (17) to the downstream test cock (19),
- opening the downstream test cock,
- closing the downstream shut off valve (22) and subsequently closing the upstream shut off valve (21),
- opening the upstream test cock (16),
- depressurizing a conduit system (30) downstream of the backflow preventer assembly (1),
- determining the liquid pressure level with the liquid pressure measurement device, wherein if the liquid pressure decreases and the discharge opening (11) leaks liquid, then the downstream check valve assembly is considered to malfunction,
- replacing the backflow preventer (2) if the downstream check valve assembly is not functioning, and repeating the previous steps,
- closing the downstream test cock and the upstream test cock,
- opening the downstream shut off valve and subsequently opening the upstream shut off valve.

9. Method according to any of the claims 3-8, wherein testing the relief valve (13) on shutting off comprises the steps of:
- closing the downstream shut off valve (22),
- drying the discharge opening (11),
- waiting a predetermined period of time, in particular at least 30 seconds,
- inspecting whether liquid drips from the discharge opening, wherein if liquid drips from the discharge opening, then the relief valve is considered not to shut off adequately,
- replacing the backflow preventer if the relief valve does not shut off adequately, and repeating the previous steps,
- opening the downstream shut off valve.

10. Method according to any of the claims 3-9, wherein testing the functioning of the relief valve (13) comprises the steps of:
- closing the downstream shut off valve (22) and subsequently closing the upstream shut off valve (21),
- opening the upstream test cock (16),
- determining whether liquid exits the discharge opening (11), wherein if no liquid exits the discharge opening, then the relief valve is stuck and thus considered to malfunction,
- replacing the backflow preventer (2) if the relief valve is not functioning, and repeating the previous steps,
- closing the upstream test cock,
- opening the downstream shut off valve and subsequently opening the upstream shut off valve.

11. Method according to any of the preceding claims, wherein testing the required opening pressure (24) of the relief valve (13) comprises the steps of:
- attaching a liquid pressure measurement device (17) to the upstream test cock (16),
- opening the upstream test cock,
- closing the upstream shut off valve (21),
- opening a draining facility (31) of the liquid pressure measurement device,
- closing the draining facility of the liquid pressure measurement device as soon as liquid starts exiting the discharge opening (11),
- determining the liquid pressure level with the liquid pressure measurement device, wherein if the liquid pressure level is below a threshold value, then the relief valve is not opening at the required liquid pressure level and thus not functioning properly,
- replacing the backflow preventer (2) if the relief valve is not functioning adequately, and repeating the previous steps,
- closing the upstream test cock,
- opening the downstream shut off valve (22) and subsequently opening the upstream shut off valve.

12. Backflow preventer assembly (1), comprising:
- a backflow preventer (2) comprising:
• a housing (3) comprising an inlet (4) and an outlet (5),
• an upstream check valve assembly (6) positioned in the housing downstream of the inlet and being biased to a first closed position (7),
• a downstream check valve assembly (8) positioned in the housing downstream of the upstream check valve assembly and being biased to a second closed position (9),
• an intermediate chamber (10) positioned between the upstream check valve assembly and the downstream check valve assembly, the intermediate chamber comprising a discharge opening (11) at a bottom side (12) thereof for emptying the intermediate chamber,
• a relief valve (13) located in the housing, the relief valve being positioned upstream of the downstream check valve assembly and being configured to move between a third closed position (14) in which it closes off the discharge opening and an open position (15) in which the discharge opening is open,
- an upstream test cock (16) positioned upstream of the upstream check valve assembly, wherein the upstream test cock is configured to be attached to a liquid pressure measurement device (17), wherein an upstream zone (18) is defined between the upstream check valve assembly and an upstream shut off valve (21),
- a downstream test cock (19) positioned downstream of the downstream check valve assembly, wherein the downstream test cock is configured to be attached to a liquid pressure measurement device,
- the upstream shut off valve positioned upstream of the upstream test cock, **characterized in that**
- a downstream shut off valve (22) is positioned downstream of the downstream test cock, wherein a downstream zone (20) is defined between the downstream check valve assembly and the downstream shut off valve, and
**in that**
the backflow preventer assembly (1) is free of any test cock (33) at the intermediate chamber.

13. Backflow preventer assembly (1) according to claim 12, wherein the upstream check valve assembly (6) and the relief valve are integrally connected.

## Patentansprüche

1. Verfahren zum Testen einer Rückflussverhindereranordnung, wobei die Rückflussverhindereranordnung zumindest umfasst:
- einen Rückflussverhinderer (2), welcher umfasst:
- ein Gehäuse (3), welches einen Einlass (4) und einen Auslass (5) umfasst,
- eine stromaufwärts gelegene Rückschlagventilanordnung (6), welche in dem Gehäuse stromabwärts des Einlasses angeordnet ist und zu einer ersten geschlossenen Position (7) vorgespannt ist,
- eine stromabwärts gelegene Rückschlagventilanordnung (8), welche in dem Gehäuse stromabwärts der stromaufwärts gelegenen Rückschlagventilanordnung angeordnet ist und zu einer zweiten geschlossenen Position (9) vorgespannt ist,
- eine Zwischenkammer (10), welche zwischen der stromaufwärts gelegenen Rückschlagventilanordnung und der stromabwärts gelegenen Rückschlagventilanordnung angeordnet ist, wobei die Zwischenkammer eine Entnahmeöffnung (11) an einer Bodenseite (12) davon zum Entleeren der Zwischenkammer umfasst,
- ein Entlastungsventil (13), welches in dem Gehäuse angeordnet ist, wobei das Entlastungsventil stromaufwärts der stromabwärts gelegenen Rückschlagventilanordnung angeordnet ist und ausgestaltet ist, um sich zwischen einer dritten geschlossenen Position (14), in welcher es die Entnahmeöffnung verschließt, und einer offenen Position (15), in welcher die Entnahmeöffnung offen ist, zu bewegen,
- einen stromaufwärts gelegenen Testhahn (16), welcher stromaufwärts der stromaufwärts gelegenen Rückschlagventilanordnung angeordnet ist, wobei der stromaufwärts gelegene Testhahn ausgestaltet ist, um an eine Flüssigkeitsdruck-Messeinrichtung (17) angebracht zu werden,
- einen stromabwärts gelegenen Testhahn (19), welcher stromabwärts der stromabwärts gelegenen Rückschlagventilanordnung angeordnet ist, wobei der stromabwärts gelegene Testhahn ausgestaltet ist, um an die Flüssigkeitsdruck-Messeinrichtung angebracht zu werden,
- ein stromaufwärts gelegenes Sperrventil (21), welches stromaufwärts des stromaufwärts gelegenen Testhahns angeordnet ist, wobei eine stromaufwärts gelegene Zone (18) zwischen der stromaufwärts gelegenen Rückschlagventilanordnung und dem stromaufwärts gelegenen Sperrventil definiert ist,
- ein stromabwärts gelegenes Sperrventil (22), welches stromabwärts des stromabwärts gelegenen Testhahns angeordnet ist, wobei eine stromabwärts gelegene Zone (20) zwischen der stromabwärts gelegenen Rückschlagventilanordnung und dem stromabwärts gelegenen Sperrventil definiert ist,
wobei das Verfahren zum Testen der Rückflussverhindereranordnung umfasst:
- Testen des stromabwärts gelegenen Sperrventils und der stromabwärts gelegenen Rückschlagventilanordnung, indem eine Entwicklung über eine Zeit eines ersten Drucks (23) in der stromabwärts gelegenen Zone bei dem stromabwärts gelegenen Testhahn gemessen wird,
- Testen eines Öffnungsdrucks (24) des Entlastungsventils, indem das stromaufwärts gelegene Sperrventil geschlossen wird, wobei der Druck in der stromaufwärts gelegenen Zone allmählich abgesenkt wird, indem Flüssigkeit von der stromaufwärts gelegenen Zone mittels des stromaufwärts gelegenen Testhahns abgezapft wird und indem ein zweiter, absoluter Druck (25) bei dem stromaufwärts gelegenen Testhahn gemessen wird, bei welchem begonnen wird, ein Fluid mittels der Entnahmeöffnung zu entnehmen und der zweite, absolute Druck mit einem erforderlichen Schwellendruck für das Entlastungsventil verglichen wird.

2. Verfahren nach Anspruch 1, wobei der erste Druck (23) und der zweite, absolute Druck (25) mit einem Manometer (27) gemessen werden.

3. Verfahren nach Anspruch 1 oder 2, wobei ein Ablauf zum Testen der Rückflussverhindereranordnung (1) die folgenden Schritte in der vorgegebenen Reihenfolge umfasst:
a) Testen der gesamten Rückflussverhindereranordnung (1) auf äußere Undichtigkeit,
b) Testen des stromaufwärts gelegenen Sperrventils (21) und der stromaufwärts gelegenen Rückschlagventilanordnung (6) auf Schließen,
c) Testen des stromabwärts gelegenen Sperrventils (22) und der stromabwärts gelegenen Rückschlagventilanordnung (6) auf Schließen,
d) Testen des Entlastungsventils (13) auf Schließen, ob es blockiert ist und auf den Öffnungsdruck (24).

4. Verfahren nach Anspruch 3, wobei das Testen der Rückflussverhindereranordnung (1) auf eine äußere Undichtigkeit die Schritte umfasst:
- Trocknen einer Außenfläche (28) der Rückflussverhindereranordnung (1),
- Warten einer vorbestimmten Zeitperiode, insbesondere mindestens eine Minute,
- visuelle Überprüfung der Rückflussverhindereranordnung (1) auf Undichtigkeiten.

5. Verfahren nach Anspruch 3 oder 4, wobei das Testen des stromaufwärts gelegenen Sperrventils (21) die Schritte umfasst:
- Schließen des stromabwärts gelegenen Sperrventils (22) und anschließendes Schließen des stromaufwärts gelegenen Sperrventils,
- Öffnen des stromaufwärts gelegenen Testhahns (16),
- Trocknen des stromaufwärts gelegenen Testhahns, während ein sichtbares Flüssigkeitsniveau in dem stromaufwärts gelegenen Testhahn beibehalten wird,
- Bestimmen, ob das Flüssigkeitsniveau konstant bleibt oder ansteigt, wobei, wenn das Flüssigkeitsniveau ansteigt, das stromaufwärts gelegene Sperrventil als fehlerhaft betrachtet wird,
- Schließen des stromaufwärts gelegenen Testhahns,
- Öffnen des stromabwärts gelegenen Sperrventils und anschließendes Öffnen des stromaufwärts gelegenen Sperrventils.

6. Verfahren nach einem der Ansprüche 3-5, wobei das Testen der stromaufwärts gelegenen Rückschlagventilanordnung (6) die Schritte umfasst:
- Schließen des stromabwärts gelegenen Sperrventils (22) und anschließendes Schließen des stromaufwärts gelegenen Sperrventils (21),
- Öffnen des stromaufwärts gelegenen Testhahns (16),
- Trocknen des stromaufwärts gelegenen Testhahns, während ein sichtbares Flüssigkeitsniveau in dem stromaufwärts gelegenen Testhahn beibehalten wird,
- Bestimmen, ob das Flüssigkeitsniveau konstant bleibt oder abfällt, wobei, wenn das Flüssigkeitsniveau abfällt:
- Trocknen der Entnahmeöffnung (11), und:
- Warten einer vorbestimmten Zeitperiode, insbesondere 30 Sekunden, und
- Prüfen der Entnahmeöffnung auf Tropfen, wobei, wenn Flüssigkeit von der Entnahmeöffnung tropft, das Entlastungsventil (13) als nicht angemessen absperrend betrachtet wird, und wobei, wenn keine Flüssigkeit von der Entnahmeöffnung tropft, die stromaufwärts gelegene Rückschlagventilanordnung als fehlerhaft betrachtet wird,
- Ersetzen des Rückflussverhinderers (2), wenn die stromaufwärts gelegene Rückschlagventilanordnung nicht funktioniert, und Wiederholen der vorherigen Schritte,
- Schließen des stromaufwärts gelegenen Testhahns,
- Öffnen des stromabwärts gelegenen Sperrventils und anschließendes Öffnen des stromaufwärts gelegenen Sperrventils.

7. Verfahren nach einem der vorhergehenden Ansprüche, wobei das Testen des stromabwärts gelegenen Sperrventils (22) die Schritte umfasst:
- Koppeln der Flüssigkeitsdruck-Messeinrichtung (17) mit dem stromabwärts gelegenen Testhahn (19),
- Öffnen des stromabwärts gelegenen Testhahns,
- Schließen des stromabwärts gelegenen Sperrventils und anschließendes Schließen des stromaufwärts gelegenen Sperrventils (21),
- Öffnen des stromaufwärts gelegenen Testhahns (16),
- Druck eines Leitungssystems (30) stromabwärts des stromabwärts gelegenen Sperrventils herabsetzen,
- Bestimmen des Flüssigkeitsdruckniveaus mit der Flüssigkeitsdruck-Messeinrichtung, wobei, wenn der Flüssigkeitsdruck abnimmt und die Entnahmeöffnung (11) trocken bleibt, das stromabwärts gelegene Sperrventil als fehlerhaft betrachtet wird,
- Reparieren des stromabwärts gelegenen Sperrventils, wenn das stromabwärts gelegene Sperrventil als fehlerhaft betrachtet wird, und Wiederholen der vorherigen Schritte,
- Schließen des stromabwärts gelegenen Testhahns und des stromaufwärts gelegenen Testhahns,
- Öffnen des stromabwärts gelegenen Sperrventils und anschließendes Öffnen des stromaufwärts gelegenen Sperrventils.

8. Verfahren nach einem der vorhergehenden Ansprüche, wobei das Testen der stromabwärts gelegenen Rückschlagventilanordnung (8) die Schritte umfasst:
- Koppeln der Flüssigkeitsdruck-Messeinrichtung (17) mit dem stromabwärts gelegenen Testhahn (19),
- Öffnen des stromabwärts gelegenen Testhahns,
- Schließen des stromabwärts gelegenen Sperrventils (22) und anschließendes Schließen des stromaufwärts gelegenen Sperrventils (21),
- Öffnen des stromaufwärts gelegenen Testhahns (16),
- Druck eines Leitungssystems (30) stromabwärts der Rückflussverhindereranordnung (1) herabsetzen,
- Bestimmen des Flüssigkeitsdruckniveaus mit der Flüssigkeitsdruck-Messeinrichtung, wobei, wenn der Flüssigkeitsdruck abnimmt und die Entnahmeöffnung (11) hinsichtlich Flüssigkeit undicht ist, die stromabwärts gelegene Rückschlagventilanordnung dann als fehlerhaft betrachtet wird,
- Ersetzen des Rückflussverhinderers (2), wenn die stromabwärts gelegene Rückschlagventilanordnung nicht funktioniert, und Wiederholen der vorherigen Schritte,
- Schließen des stromabwärts gelegenen Testhahns und des stromaufwärts gelegenen Testhahns,
- Öffnen des stromabwärts gelegenen Sperrventils und anschließendes Öffnen des stromaufwärts gelegenen Sperrventils.

9. Verfahren nach einem der Ansprüche 3-8, wobei das Testen des Entlastungsventils (13) auf Schließen die Schritte umfasst:
- Schließen des stromabwärts gelegenen Sperrventils (22),
- Trocknen der Entnahmeöffnung (11),
- Warten einer vorbestimmten Zeitperiode, insbesondere mindestens 30 Sekunden,
- Untersuchen, ob Flüssigkeit von der Entnahmeöffnung tropft, wobei, wenn Flüssigkeit von der Entnahmeöffnung tropft, das Entlastungsventil dann als nicht angemessen sperrend betrachtet wird,
- Ersetzen des Rückflussverhinderers, wenn das Entlastungsventil nicht angemessen sperrt, und Wiederholen der vorherigen Schritte,
- Öffnen des stromabwärts gelegenen Sperrventils.

10. Verfahren nach einem der Schritte 3-9, wobei das Testen des Funktionierens des Entlastungsventils (13) die Schritte umfasst:
- Schließen des stromabwärts gelegenen Sperrventils (22) und anschließendes Schließen des stromaufwärts gelegenen Sperrventils (21),
- Öffnen des stromaufwärts gelegenen Testhahns (16),
- Bestimmen, ob Flüssigkeit von der Entnahmeöffnung (11) austritt, wobei, wenn keine Flüssigkeit von der Entnahmeöffnung austritt, das Entlastungsventil dann blockiert ist, und daher als fehlerhaft betrachtet wird,
- Ersetzen des Rückflussverhinderers (2), wenn das Entlastungsventil nicht funktioniert, und Wiederholen der vorherigen Schritte,
- Schließen des stromaufwärts gelegenen Testhahns,
- Öffnen des stromabwärts gelegenen Sperrventils und anschließendes Öffnen des stromaufwärts gelegenen Sperrventils.

11. Verfahren nach einem der vorhergehenden Ansprüche, wobei das Testen des erforderlichen Öffnungsdrucks (24) des Entlastungsventils (13) die Schritte umfasst:
- Anbringen einer Flüssigkeitsdruck-Messeinrichtung (17) an dem stromaufwärts gelegenen Testhahn (16),
- Öffnen des stromaufwärts gelegenen Testhahns,
- Schließen des stromaufwärts gelegenen Sperrventils (21),
- Öffnen einer Trocknungseinrichtung (31) der Flüssigkeitsdruck-Messeinrichtung,
- Schließen der Trocknungseinrichtung der Flüssigkeitsdruck-Messeinrichtung, sobald Flüssigkeit beginnt, aus der Entnahmeöffnung (11) auszutreten,
- Bestimmen des Flüssigkeitsdruckniveaus mit der Flüssigkeitsdruck-Messeinrichtung, wobei, wenn das Flüssigkeitsdruckniveau unterhalb eines Schwellenwertes liegt, das Entlastungsventil dann nicht bei dem erforderlichen Flüssigkeitsdruckniveau geöffnet wird und damit nicht geeignet funktioniert,
- Ersetzen des Rückflussverhinderers (2), wenn das Entlastungsventil nicht angemessen funktioniert, und Wiederholen der vorherigen Schritte,
- Schließen des stromaufwärts gelegenen Testhahns,
- Öffnen des stromabwärts gelegenen Sperrventils (22) und anschließendes Öffnen des stromaufwärts gelegenen Sperrventils.

12. Rückflussverhindereranordnung (1), umfassend:
- einen Rückflussverhinderer (2), welcher umfasst:
- ein Gehäuse (3), welches einen Einlass (4) und einen Auslass (5) umfasst,
- eine stromaufwärts gelegene Rückschlagventilanordnung (6), welche in dem Gehäuse stromabwärts des Einlasses angeordnet ist und zu einer ersten geschlossenen Position (7) vorgespannt ist,
- eine stromabwärts gelegene Rückschlagventilanordnung (8), welche in dem Gehäuse stromabwärts der stromaufwärts gelegenen Rückschlagventilanordnung angeordnet ist und zu einer zweiten geschlossenen Position (9) vorgespannt ist,
- eine Zwischenkammer (10), welche zwischen der stromaufwärts gelegenen Rückschlagventilanordnung und der stromabwärts gelegenen Rückschlagventilanordnung angeordnet ist, wobei die Zwischenkammer eine Entnahmeöffnung (11) an einer Bodenseite (12) davon zum Entleeren der Zwischenkammer umfasst,
- ein Entlastungsventil (13), welches in dem Gehäuse angeordnet ist, wobei das Entlastungsventil stromaufwärts der stromabwärts gelegenen Rückschlagventilanordnung angeordnet ist und ausgestaltet ist, um sich zwischen einer dritten geschlossenen Position (14), in welcher es die Entnahmeöffnung verschließt, und einer offenen Position (15) in welcher die Entnahmeöffnung offen ist, zu bewegen,
- einen stromaufwärts gelegenen Testhahn (16), welcher stromaufwärts der stromaufwärts gelegenen Rückschlagventilanordnung angeordnet ist, wobei der stromaufwärts gelegene Testhahn ausgestaltet ist, um an eine Flüssigkeitsdruck-Messeinrichtung (17) angebracht zu werden, wobei eine stromaufwärts gelegene Zone (18) zwischen der stromaufwärts gelegenen Rückschlagventilanordnung und einem stromaufwärts gelegenen Sperrventil (21) definiert ist,
- einen stromabwärts gelegenen Testhahn (19), welcher stromabwärts der stromabwärts gelegenen Rückschlagventilanordnung angeordnet ist, wobei der stromabwärts gelegene Testhahn ausgestaltet ist, um an die Flüssigkeitsdruck-Messeinrichtung angebracht zu werden,
- ein stromaufwärts gelegenes Sperrventil (21), welches stromaufwärts des stromaufwärts gelegenen Testhahns angeordnet ist,
**dadurch gekennzeichnet,**
- **dass** ein stromabwärts gelegenes Sperrventil (22) stromabwärts des stromabwärts gelegenen Testhahns angeordnet ist, wobei eine stromabwärts gelegene Zone (20) zwischen der stromabwärts gelegenen Rückschlagventilanordnung und dem stromabwärts gelegenen Sperrventil definiert ist, und
- **dass** die Rückflussverhindereranordnung (1) frei von jeglichem Testhahn (33) bei der Zwischenkammer ist.

13. Rückflussverhindereranordnung (1) nach Anspruch 12, wobei die stromaufwärts gelegene Rückschlagventilanordnung (6) und das Entlastungsventil ganzheitlich verbunden sind.

## Revendications

1. Procédé de contrôle d'un ensemble dispositif anti-refoulement (1), l'ensemble dispositif anti-refoulement comprenant au moins :
- un dispositif anti-refoulement (2) comprenant :
• un boîtier (3) comprenant une entrée (4) et une sortie (5),
• un ensemble clapet anti-retour amont (6) positionné dans le boîtier en aval de l'entrée et sollicité vers une première position fermée (7),
• un ensemble clapet anti-retour aval (8) positionné dans le boîtier en aval de l'ensemble clapet anti-retour amont et sollicité vers une deuxième position fermée (9),
• une chambre intermédiaire (10) positionnée entre l'ensemble clapet anti-retour amont et l'ensemble clapet anti-retour aval, la chambre intermédiaire comprenant une ouverture d'évacuation (11) dans sa partie inférieure (12) pour vider la chambre intermédiaire,
• un clapet de décharge (13) situé dans le boîtier, le clapet de décharge étant positionné en amont de l'ensemble clapet anti-retour aval et étant configuré pour se déplacer entre une troisième position fermée (14) dans laquelle il ferme l'ouverture d'évacuation et une position ouverte (15) dans laquelle l'ouverture d'évacuation est ouverte,
- un robinet de contrôle amont (16) positionné en amont de l'ensemble clapet anti-retour amont, dans lequel le robinet de contrôle amont est configuré pour être fixé à un dispositif de mesure de pression de liquide (17),
- un robinet de contrôle aval (19) positionné en aval de l'ensemble clapet anti-retour aval, dans lequel le robinet de contrôle aval est configuré pour être fixé au dispositif de mesure de pression de liquide,
- une soupape d'arrêt amont (21) positionnée en amont du robinet de contrôle amont, dans lequel une zone amont (18) est définie entre l'ensemble clapet anti-retour amont et la soupape d'arrêt amont,
- une soupape d'arrêt aval (22) positionnée en aval du robinet de contrôle aval, dans lequel une zone aval (20) est définie entre l'ensemble clapet anti-retour aval et la soupape d'arrêt aval,
dans lequel le procédé de contrôle de l'ensemble dispositif anti-refoulement (1) comprend :
- le contrôle de la soupape d'arrêt aval et de l'ensemble clapet anti-retour aval consistant à mesurer le développement dans le temps d'une première pression (23) dans la zone aval au niveau du robinet de contrôle aval,
- le contrôle d'une pression d'ouverture (24) du clapet de décharge en fermant la soupape d'arrêt amont, en diminuant progressivement la pression dans la zone amont en prélevant du liquide de la zone amont par le robinet de contrôle amont et en mesurant une seconde pression absolue (25) au niveau du robinet de contrôle amont à laquelle le liquide commence à s'évacuer par l'ouverture d'évacuation et en comparant ladite seconde pression absolue à une pression seuil requise pour le clapet de décharge.

2. Procédé selon la revendication 1, dans lequel la première pression (23) et la seconde pression absolue (25) sont mesurées avec un manomètre (27).

3. Procédé selon les revendications 1 ou 2, dans lequel un ordre de contrôle de l'ensemble dispositif anti-refoulement (1) comprend les étapes suivantes dans l'ordre donné :
a) contrôle de l'ensemble dispositif anti-refoulement complet (1) sur fuite externe,
b) contrôle de la soupape d'arrêt amont (21) et de l'ensemble clapet anti-retour amont (6) sur arrêt,
c) contrôle de la soupape d'arrêt aval (22) et de l'ensemble clapet anti-retour aval (8) sur arrêt,
d) contrôle du clapet de décharge (13) sur arrêt, sur blocage, et sur pression d'ouverture (24).

4. Procédé selon la revendication 3, dans lequel le contrôle de l'ensemble dispositif anti-refoulement (1) sur fuite externe comprend les étapes suivantes :
- séchage d'une surface externe (28) de l'ensemble dispositif anti-refoulement (1),
- attente pendant un laps de temps prédéterminé, en particulier au moins une minute,
- contrôle visuel de l'ensemble dispositif anti-refoulement (1) pour vérifier l'absence de fuites.

5. Procédé selon les revendications 3 ou 4, dans lequel le contrôle de la soupape d'arrêt amont (21) comprend les étapes suivantes :
- fermeture de la soupape d'arrêt aval (22) puis fermeture de la soupape d'arrêt amont,
- ouverture du robinet de contrôle amont (16),
- séchage du robinet de contrôle amont tout en maintenant un niveau de liquide visible dans le robinet de contrôle amont,
- détermination du fait que le niveau de liquide reste constant ou monte, dans lequel lorsque le niveau de liquide monte, la soupape d'arrêt amont est considérée comme défectueuse,
- fermeture du robinet de contrôle amont,
- ouverture de la soupape d'arrêt aval puis ouverture de la soupape d'arrêt amont.

6. Procédé selon l'une quelconque des revendications 3 à 5, dans lequel le contrôle de l'ensemble clapet anti-retour amont (6) comprend les étapes suivantes :
- fermeture de la soupape d'arrêt aval (22) puis fermeture de la soupape d'arrêt amont (21),
- ouverture du robinet de contrôle amont (16),
- séchage du robinet de contrôle amont tout en maintenant un niveau de liquide visible dans le robinet de contrôle amont,
- détermination du fait que le niveau de liquide reste constant ou descend, dans lequel si le niveau de liquide descend :
• séchage de l'ouverture d'évacuation (11), et :
• attente pendant un laps de temps prédéterminé, en particulier 30 secondes, et
• contrôle de l'ouverture d'évacuation pour vérifier l'absence d'écoulement, dans lequel lorsque du liquide s'écoule de l'ouverture d'évacuation, alors le clapet de décharge (13) est considéré comme ne se fermant pas de façon adéquate, et dans lequel lorsqu'aucun liquide ne s'écoule de l'ouverture d'évacuation, l'ensemble clapet anti-retour amont est considéré comme défectueux,
- remplacement du dispositif anti-refoulement (2) lorsque l'ensemble clapet anti-retour amont ne fonctionne pas, et répétition des étapes précédentes,
- fermeture du robinet de contrôle amont,
- ouverture de la soupape d'arrêt aval puis ouverture de la soupape d'arrêt amont.

7. Procédé selon l'une quelconque des revendications précédentes, dans lequel le contrôle de la soupape d'arrêt aval (22) comprend les étapes suivantes :
- couplage du dispositif de mesure de pression de liquide (17) au robinet de contrôle aval (19),
- ouverture du robinet de contrôle aval,
- fermeture de la soupape d'arrêt aval puis fermeture de la soupape d'arrêt amont (21),
- ouverture du robinet de contrôle amont (16),
- mise hors pression d'un système de conduit (30) en aval de la soupape d'arrêt aval,
- détermination du niveau de pression de liquide avec le dispositif de mesure de pression de liquide, dans lequel lorsque la pression de liquide diminue et que l'ouverture d'évacuation (11) reste sèche, alors la soupape d'arrêt aval est considérée comme défectueuse,
- réparation de la soupape d'arrêt aval si la soupape d'arrêt aval est considérée comme défectueuse, et répétition des étapes précédentes,
- fermeture du robinet de contrôle aval et le robinet de contrôle amont,
- ouverture de la soupape d'arrêt aval puis ouverture de la soupape d'arrêt amont.

8. Procédé selon l'une quelconque des revendications précédentes, dans lequel le contrôle de l'ensemble clapet anti-retour aval (8) comprend les étapes suivantes :
- couplage du dispositif de mesure de pression de liquide (17) au robinet de contrôle aval (19),
- ouverture du robinet de contrôle aval,
- fermeture de la soupape d'arrêt aval (22) puis fermeture de la soupape d'arrêt amont (21),
- ouverture du robinet de contrôle amont (16),
- mise hors pression d'un système de conduit (30) en aval de l'ensemble dispositif anti-refoulement (1),
- détermination du niveau de pression de liquide avec le dispositif de mesure de pression de liquide, dans lequel si la pression de liquide diminue et que l'ouverture d'évacuation (11) laisse s'échapper du liquide, alors l'ensemble clapet anti-retour aval est considéré comme défectueux,
- remplacement du dispositif anti-refoulement (2) si l'ensemble clapet anti-retour aval ne fonctionne pas, et répétition des étapes précédentes,
- fermeture du robinet de contrôle aval et du robinet de contrôle amont,
- ouverture de la soupape d'arrêt aval puis ouverture de la soupape d'arrêt amont.

9. Procédé selon l'une quelconque des revendications 3 à 8, dans lequel le contrôle du clapet de décharge (13) sur arrêt comprend les étapes suivantes :
- fermeture de la soupape d'arrêt aval (22),
- séchage de l'ouverture d'évacuation (11),
- attente pendant un laps de temps prédéterminé, en particulier au moins 30 secondes,
- inspection pour voir si du liquide s'écoule ou non de l'ouverture d'évacuation, dans lequel si du liquide s'écoule de l'ouverture d'évacuation, alors le clapet de décharge est considéré comme ne se fermant pas de façon adéquate,
- remplacement du dispositif anti-refoulement si le clapet de décharge ne se ferme pas de façon adéquate, et répétition des étapes précédentes,
- ouverture de la soupape d'arrêt aval.

10. Procédé selon l'une quelconque des revendications 3 à 9, dans lequel le contrôle du fonctionnement du clapet de décharge (13) comprend les étapes suivantes :
- fermeture de la soupape d'arrêt aval (22) puis fermeture de la soupape d'arrêt amont (21),
- ouverture du robinet de contrôle amont (16),
- détermination du fait que du liquide sort ou non de l'ouverture d'évacuation (11), dans lequel si aucun liquide de sort de l'ouverture d'évacuation, alors le clapet de décharge est bloqué et donc considéré comme défectueux,
- remplacement du dispositif anti-refoulement (2) si le clapet de décharge ne fonctionne pas, et répétition des étapes précédentes,
- fermeture du robinet de contrôle amont,
- ouverture de la soupape d'arrêt aval puis ouverture de la soupape d'arrêt amont.

11. Procédé selon l'une quelconque des revendications précédentes, dans lequel le contrôle de la pression d'ouverture requise (24) du clapet de décharge (13) comprend les étapes suivantes :
- fixation d'un dispositif de mesure de pression de liquide (17) au robinet de contrôle amont (16),
- ouverture du robinet de contrôle amont,
- fermeture de la soupape d'arrêt amont (21),
- ouverture d'une installation de vidange (31) du dispositif de mesure de pression de liquide,
- fermeture de l'installation de vidange du dispositif de mesure de pression de liquide dès que du liquide commence à sortir de l'ouverture d'évacuation (11),
- détermination du niveau de pression de liquide avec le dispositif de mesure de pression de liquide, dans lequel si le niveau de pression de liquide est inférieur à une valeur seuil, alors le clapet de décharge ne s'ouvre pas au niveau de pression de liquide requis et ne fonctionne donc pas correctement,
- remplacement du dispositif anti-refoulement (2) si le clapet de décharge ne fonctionne pas de façon adéquate, et répétition des étapes précédentes,
- fermeture du robinet de contrôle amont,
- ouverture de la soupape d'arrêt aval (22) puis ouverture de la soupape d'arrêt amont.

12. Ensemble dispositif anti-refoulement (1), comprenant :
- un dispositif anti-refoulement (2) comprenant :
• un boîtier (3) comprenant une entrée (4) et une sortie (5),
• un ensemble clapet anti-retour amont (6) positionné dans le boîtier en aval de l'entrée et sollicité vers une première position fermée (7),
• un ensemble clapet anti-retour aval (8) positionné dans le boîtier en aval de l'ensemble clapet anti-retour amont et sollicité vers une deuxième position fermée (9),
• une chambre intermédiaire (10) positionnée entre l'ensemble clapet anti-retour amont et l'ensemble clapet anti-retour aval, la chambre intermédiaire comprenant une ouverture d'évacuation (11) dans sa partie inférieure (12) pour vider la chambre intermédiaire,
• un clapet de décharge (13) situé dans le boîtier, le clapet de décharge étant positionné en amont de l'ensemble clapet anti-retour aval et étant configuré pour se déplacer entre une troisième position fermée (14) dans laquelle il ferme l'ouverture d'évacuation et une position ouverte (15) dans laquelle l'ouverture d'évacuation est ouverte,
- un robinet de contrôle amont (16) positionné en amont de l'ensemble clapet anti-retour amont, dans lequel le robinet de contrôle amont est configuré pour être fixé à un dispositif de mesure de pression de liquide (17), dans lequel une zone amont (18) est définie entre l'ensemble clapet anti-retour amont et une soupape d'arrêt amont (21),
- un robinet de contrôle aval (19) positionné en aval de l'ensemble clapet anti-retour aval, dans lequel le robinet de contrôle aval est configuré pour être fixé à un dispositif de mesure de pression de liquide,
- la soupape d'arrêt amont positionnée en amont du robinet de contrôle amont,
**caractérisé en ce que**
- une soupape d'arrêt aval (22) est positionnée en aval du robinet de contrôle aval, dans lequel une zone aval (20) est définie entre l'ensemble clapet anti-retour aval et la soupape d'arrêt aval, et
**en ce que**
l'ensemble dispositif anti-refoulement (1) est exempt de tout robinet de contrôle (33) au niveau de la chambre intermédiaire.

13. Ensemble dispositif anti-refoulement (1) selon la revendication 12, dans lequel l'ensemble clapet anti-retour amont (6) et le clapet de décharge sont reliés d'un seul tenant.
